# EUROPÄISCHE PATENTANMELDUNG

(11) **EP 4 201 735 A2**
(43) Veröffentlichungstag der Anmeldung: **28.06.2023**
(21) Anmeldenummer: 22213412.4
(22) Anmeldetag: 14.12.2022
(51) Int. Cl.: B60L 53/16, B60L 53/18, B60L 53/62, B60L 53/65, B60L 53/66

(54) **ADAPTER UND LADESYSTEM**

(30) Priorität: 22.12.2021 EP 21216977
(71) Anmelder: PhySens GmbH, 38104 Braunschweig (DE)
(72) Erfinder: Heinisch, Philip, 29525 Uelzen (DE); Ostazewski, Katharina, 38239 Salzgitter (DE); STRUCKMANN, Henriette, 38162 Cremlingen (DE)
(74) Vertreter: Gramm, Lins & Partner Patent- und Rechtsanwälte PartGmbB

(57) **Zusammenfassung**

Die Erfindung betrifft einen Adapter, der ausgebildet ist zum Verbinden mit einer Ladevorrichtung zum Abgeben eines Ladestroms einerseits und mit einem mobilen Ladestromempfänger zum Aufnehmen des Ladestroms andererseits, mit einem Aufnahme-Steckerteil zum Verbinden mit der Ladevorrichtung, einem Abgabe-Steckerteil zum Verbinden mit einem Ladeanschluss des Ladestromempfängers, das mit dem Aufnahme-Steckerteil verbunden ist, und einer Steuereinheit, die eine Kommunikationseinheit, die ausgebildet ist zum, insbesondere drahtlosen, Übertragen von Daten an einen vom Adapter beabstandeten Kontrollrechner, aufweist, wobei der Adapter sowohl vom Ladestromempfänger als auch von der Ladevorrichtung trennbar ausgebildet ist, die Steuereinheit einen Widerstandsmesser aufweist und ausgebildet ist zum Messen zumindest eines Ladestromempfänger-Messwerts in Form eines elektrischen Statuswiderstands zwischen zumindest zwei Polen des Abgabe-Steckerteils mit einer relativen Messunsicherheit von höchstens und/oder eines Diodenparameters, der eine Abweichung einer Übertragungsfunktion einer Diode des Ladestromempfängers von der Übertragungsfunktion einer idealen Diode beschreibt, wobei die Diode Teil einer Ladesteuerungsschaltung des Ladestromempfängers.

## Beschreibung

Die Erfindung betrifft einen Adapter, der ausgebildet ist zum Verbinden mit einer Ladevorrichtung zum Abgeben eines Ladestroms einerseits und mit einem mobilen Ladestromempfänger zum Aufnehmen des Ladestroms andererseits, wobei der Adapter (a) ein Aufnahme-Steckerteil zum Verbinden mit der Ladevorrichtung, (b) ein Abgabe-Steckerteil zum Verbinden mit einem Ladeanschluss des Ladestromempfängers, das mit dem Aufnahme-Steckerteil verbunden ist, und (c) eine Steuereinheit, die eine Kommunikationseinheit, die ausgebildet ist zum, insbesondere drahtlosen, Übertragen von Daten an einen vom Adapter beabstandeten Kontrollrechner, aufweist. Gemäß einem zweiten Aspekt betrifft die Erfindung ein Ladesystem gemäß dem Oberbegriff von Anspruch 14.

Bei dem Ladestromempfänger handelt es sich beispielsweise um ein Elektrofahrzeug. Durch die zunehmende Verbreitung von Elektrofahrzeugen stellt sich vermehrt die Frage, wie solche Elektrofahrzeuge mit möglichst geringem Aufwand geladen werden können. Um Fahrten zu verringern, bieten manche Unternehmen den Nutzern von Elektrofahrzeugen an, diese für die Fahrt zur eigenen Wohnung zu nutzen, wenn dafür die Elektrofahrzeuge aufgeladen werden. Da jedoch die Ladekosten beträchtlich sind, wird dieses Angebot kaum angenommen.

Werden die Stromkosten für das Laden übernommen, kann das dazu führen, dass der Strom, der angeblich zum Laden des Elektrofahrzeugs verwendet wird, tatsächlich für andere Zwecke verwendet wird. Es ist daher wünschenswert, eine Lösung zu finden, die es einerseits ermöglicht, die Stromkosten demjenigen zu erstatten, dessen Ladevorrichtung verwendet wird, und es andererseits ermöglicht sicherzustellen, dass nur derjenige Ladestromempfänger geladen wird, für den die Ladekosten übernommen werden sollen.

WO2010/034741 A1 beschreibt einen Adapter zum Anschluss eines elektrischen Verbrauchers an eine Ladestation eines Stromnetzes, mit dem Ziel, das Anschließen an Ladestationen mit verschiedenen Anschlüssen zu vereinfachen, indem alle Komponenten, die für einen Ladevorgang notwendig sind, in dem Adapter integriert werden. Dies umfasst insbesondere eine Adapter-Identifizierungseinrichtung, verschiedene Anschlüsse zur Verbindung eines Verbrauchers mit einer Ladestation, Regelungstechnik zur intelligenten Steuerung des Verbrauchers, ein bidirektionales Kommunikationsmodul zwischen Adapter und Ladestation und eine Zähleinrichtung, beispielsweise in Form eines Smart Meters, um eine direkte Abrechnung zu ermöglichen.

In WO2011/147391 wird ein Ladekabel zum intelligenten Laden von Elektrofahrzeugen beschrieben. Das Kabel ist weder mit der Ladestation noch mit dem Elektrofahrzeug fest verbunden. Es kann den Ladevorgang intelligent steuern und verfügt über eine Abrechnungsmöglichkeit.

Aus der US 2020/0180465 A1 ist ein System bekannt, mittels dem ein Elektrofahrzeug mit unterschiedlichen Ladeleistungen je nach aktuellem oder in der Zukunft zu erwartendem Strompreis geladen wird. Dazu wird ein Ladekabel verwendet, das einen Adapter enthält, der eine Kennung speichert, die das Ladekabel eindeutig identifiziert.

Aus der DE10 2019 115 176 A1 ist ein Adapter bekannt, der zwischen eine Ladeeinrichtung und ein Ladekabel geschaltet werden kann, um die Temperaturentwicklung zu überwachen. Die Temperatur wird beispielsweise mittels eines Thermistors gemessen. Steigt die Temperatur über eine Schwellentemperatur, wird der Ladestrom gedrosselt oder unterbrochen.

Die DE 10 2017 221 597 A1 beschreibt einen Adapter zum Verbinden beispielsweise einer Haushaltssteckdose mit einem Elektrofahrzeug. Der Adapter kann ein Organisationsmodul aufweisen, das so ausgebildet ist, dass das Elektrofahrzeug genau eine vorgegebene elektrische Ladung erhält.

Die WO 2011/098116 A1 beschreibt einen Adapter zum Anschluss eines Elektrofahrzeugs an eine Ladestation und zum Identifizieren dieses Verbrauchers mittels RFID oder eines Barcodes.

Der Erfindung liegt die Aufgabe zugrunde, die Identifizierung des Ladestromempfängers möglichst einfach und manipulationssicher zu ermöglichen.

Die Erfindung löst das Problem durch einen gattungsgemäßen Adapter, bei dem die Steuereinheit einen Widerstandmesser aufweist, der ausgebildet ist zum Messen zumindest eines Ladestromempfänger-Messwerts (i) in Form eines elektrischen Statuswiderstands zwischen zumindest zwei Polen des Abgabe-Steckerteils mit einer relativen Messunsicherheit von höchstens 10⁻² und/oder (ii) eines Diodenparameters, der eine Abweichung einer Übertragungsfunktion einer Diode des Ladestromempfängers von der Übertragungsfunktion einer idealen Diode beschreibt, wobei die Diode Teil einer Ladesteuerungsschaltung des Ladestromempfängers ist, zum Identifizieren des Ladestromempfängers anhand des Ladestromempfänger-Messwerts. In anderen Worten ist die Steuereinheit insbesondere ausgebildet zum Identifizieren des Ladestromempfängers anhand des zumindest einen Ladestromempfänger-Messwerts.

Gemäß einem zweiten Aspekt löst die Erfindung das Problem durch ein Ladesystem mit (a) zumindest einer Ladevorrichtung, (b) zumindest einem erfindungsgemäßen Adapter und (c) einem vom zumindest einen Adapter beabstandeten Kontrollrechner, wobei das Ladesystem ausgebildet ist zum automatischen Identifizieren des Ladestromempfängers anhand des Ladestromempfänger-Messwerts, insbesondere durch Vergleichen des zumindest einen Ladestromempfänger-Messwerts mit Ladestromempfänger-Sollwerten, die in einer Datenbank gespeichert sind, wobei in der Datenbank Ladestromempfänger-Soll-Messwerte einer Vielzahl an Ladestromempfängern mit jeweils einem Identifikationsparameter verknüpft sind.

Vorzugsweise ist die Ladevorrichtung ausgebildet zum Ausgeben einer Warnmeldung, wenn der Ladestromempfänger-Messwerts (M₁) nicht dem Ladestromempfänger-Sollwert entspricht und/oder Ausgeben einer Freigabemeldung, wenn der Ladestromempfänger-Messwert nicht dem Ladestromempfänger-Sollwert entspricht.

Alternativ oder zusätzlich ist die Ladevorrichtung vorzugsweise ausgebildet zum Ausgeben einer Warnmeldung, wenn der identifizierte Ladestromempfänger nicht als zum Laden berechtigt in der Datenbank vermerkt ist. Unter einer Warnmeldung wird insbesondere eine Mitteilung verstanden, die die Tatsache kodiert, dass der Ladestromempfänger nicht zum Laden berechtigt ist. Es kann sich dabei um eine vom Menschen wahrnehmbare oder nicht wahrnehmbare Meldung handeln. Vorzugsweise bewirkt die Warnmeldung, dass von der Ladevorrichtung kein Ladestrom abgegeben wird.

Die Erfindung löst das Problem zudem durch ein Verfahren zum Identifizieren eines Elektrofahrzeugs anhand zumindest eines Ladestromempfänger-Messwerts zumindest einer Komponenten einer Ladesteuerungsschaltung des Elektrofahrzeugs.

Die Erfindung löst das Problem auch durch ein Verfahren zum Identifizieren eines Elektrofahrzeugs mit den Schritten (i) Messen eines elektrischen Statuswiderstands des Elektrofahrzeugs zwischen einem Schutzleiter eines Ladeanschlusses nach IEC 61851 (Stand 1. Dezember 2022) des Elektrofahrzeugs und einem Pilotkontakt des Ladeanschlusses und/oder eines Diodenparameters, der eine Abweichung einer Übertragungsfunktion einer Diode einer Ladesteuerungsschaltung des Elektrofahrzeugs von der Übertragungsfunktion einer idealen Diode beschreibt, sodass zumindest ein Ladestromempfänger-Messwert erhalten wird, und (ii) Identifizieren des Elektrofahrzeugs (14) anhand des zumindest einen Ladestromempfänger-Messwerts.

Unter einer Übertragungsfunktion wird diejenige Funktion verstanden, die den elektrischen Strom beschreibt, der in technischer Stromrichtung hinter der Diode fließt, wenn an die Diode eine vorgegebene, zeitlich veränderliche, insbesondere periodische, Spannung angelegt wird. Die vorgegebene, zeitlich veränderliche Spannung kann durch eine Spannungsfunktion beschrieben werden. Diese Spannungsfunktion kann eine Rechteckfunktion sein, beispielsweise mit einer Frequenz 1 Kilohertz von und/oder einer Amplitude von 12 Volt. Die Spannung hat vorzugsweise einen Nulldurchgang. Beispielsweise schwankt die Spannungsfunktion zwischen +12 Volt und -12 Volt.

Für eine ideale Diode gilt für die Übertragungsfunktion, dass sie für positive Spannungen der Spannungsfunktion entspricht und für negative Spannungen null ist.

Abweichungen von der Übertragungsfunktion der idealen Diode sind fertigungsbedingt und daher für jede Diode individuell. Aus diesem Grund kann der Ladestromempfänger, insbesondere das Elektrofahrzeug, anhand dieser Charakteristik identifiziert werden. Die Spannungsfunktion ist frei wählbar, solange sie negative und positive Spannungswerte annimmt. Vorzugsweise hat die Fourier-Transformierte der Spannungsfunktion einen Frequenzanteil von über 100 Hertz.

Die Ladesteuerungsschaltung ist diejenige Schaltung, die nach der Norm IEC 61851 denjenigen elektrischen Widerstand erzeugt, anhand dessen der Ladestrom gesteuert wird.

Die Abweichung ist beispielsweise die Quadratsumme der Differenz zwischen der gemessenen Übertragungsfunktion und der Übertragungsfunktion der idealen Diode.

Vorteilhaft an der Erfindung ist, dass der Ladestromempfänger anhand zumindest eines kaum abzuändernden Parameters in Form des Ladestromempfänger-Messwerts identifiziert wird.

Der Statuswiderstand des Ladestromempfängers, bei dem es sich um den komplexwertigen oder den ohmschen elektrischen Widerstand handeln kann, hängt von den Produktionsbedingungen der verwendeten elektrischen oder elektronischen Bauelemente ab und ist daher für den Ladestromempfänger charakteristisch. Selbst wenn mehrere Ladestromempfänger existieren, deren Ladestromempfänger-Messwerte gleich sind, ist es unwahrscheinlich, dass ein solcher Ladestromempfänger an die Ladevorrichtung angeschlossen wird.

Im Rahmen der vorliegenden Beschreibung wird unter dem Ladestromempfänger beispielsweise ein Elektroauto verstanden. Unter der Ladevorrichtung wird beispielsweise eine Ladesäule oder einer Hausladestation, die auch Wallbox genannt wird, verstanden.

Der Kontrollrechner ist insbesondere eine elektrische Recheneinheit. Es kann sich beispielsweise um einen stationären Rechner oder ein Mobiltelefon handeln. Günstig ist es, wenn auf dem Kontrollrechner eine Datenbank liegt, auf der diejenigen Ladestromempfänger-Messwerte gespeichert sind, die zu Ladestromempfängern, insbesondere Elektrofahrzeugen, gehören, die geladen werden dürfen. Der Kontrollrechner hat vorzugsweise einen Abstand von zumindest 10 m vom Adapter und/oder von der Ladevorrichtung.

Der Adapter ist sowohl vom Ladestromempfänger als auch von der Ladevorrichtung trennbar ausgebildet.

Unter dem Ladestromempfänger-Messwert wird insbesondere eine elektrische Kenngröße verstanden, die eine elektrische Komponente charakterisiert. Insbesondere handelt es sich bei - sofern vorhanden - zumindest zwei, insbesondere zumindest drei, der Ladestromempfänger-Messwerte um reelwertige und/oder komplexwertige elektrische Widerstände oder einen Real- oder Imaginärteil eines komplexwertigen elektrischen Widerstands. Der Ladestromempfänger-Messwert ist insbesondere kein Wert, der in einem digitalen Speicher des Adapters oder des Ladestromempfänger gespeichert ist und ausgelesen wird. Der Ladestromempfänger-Messwert wird insbesondere nicht mittels RFID ausgelesen.

Unter dem Merkmal, dass der Widerstandsmesser ausgebildet ist zum Messen des Ladestromempfänger-Messwerts in Form des elektrischen Widerstands, wird insbesondere verstanden, dass ein Messwert aufgenommen wird, aus dem eindeutig der elektrische Widerstand bestimmbar ist. Es kann sich dabei direkt um den elektrischen Widerstand handeln. Alternativ handelt es sich beispielsweise um eine Spannung, die zum elektrischen Widerstand proportional ist. Wiederum alternativ handelt es sich um einen Strom, der zum elektrischen Widerstand proportional ist. Zur Bestimmung des komplexwertigen Widerstands kann alternativ auch Strom und Spannung gemessen werden.

Das drahtlose Senden und/oder Kommunizieren erfolgt beispielsweise auf Basis eines Mobilfunkstandards, beispielsweise 4G oder 5G, über WLAN, beispielsweise gemäß IEEE-802.11, mittels NFC (near field communication), beispielsweise nach ISO/IEC 18092 oder ISO/IEC 21481 oder via Bluetooth. Vorzugsweise sind die zum Senden und/oder Kommunizieren verwendeten Kommunikationseinheiten ausgebildet zum Senden und/oder Kommunizieren über zwei oder mehr Standards oder Protokolle.

Vorzugsweise wird der Ladestromempfänger-Messwert kontinuierlich gemessen. Günstig ist es, wenn der Ladestromempfänger-Messwert häufiger als alle 10 Sekunden, insbesondere alle 5 Sekunden, insbesondere zumindest einmal pro Sekunde, gemessen wird. Es ist dann möglich und gemäß einer bevorzugten Ausführungsform vorgesehen, dass die Steuereinheit ausgebildet ist zum Bestimmen der Abhängigkeit des elektrischen Widerstands von der Zeit. Da sich die Temperatur des Widerstands möglicherweise mit der Zeit beim Laden erhöht, wird so eine Änderung des Widerstands verfolgbar. Aus der Abhängigkeit des elektrischen Widerstands von der Zeit wird dann der Ladestromempfänger-Messwert oder ein Ladestromempfänger-Messwert bestimmt.

Vorzugsweise ist der elektrische Statuswiderstand der elektrische Statuswiderstand nach IEC 61851-21-2:2018 zwischen dem Schutzleiter und dem Pilotkontakt des Ladeanschlusses des Ladestromempfängers. Dieser Statuswiderstand ist insbesondere der gemäß der Norm vorgesehene Widerstandswert nebst Abweichungen. Abweichungen sind die real fertigungsbedingten Abweichungen des realen Widerstandswerts vom durch die Norm festgelegten Widerstandswert und fertigungsbedingt variierende Übergangswiderstände der Ladesteuerungsschaltung und zugehöriger elektrischer Verbindungselemente. In der Norm IEC 61851-21-2:2018 wird der Statuswiderstand als Widerstand für die Pilotleiterfunktion bezeichnet.

Die relative Messunsicherheit ist insbesondere der Quotient aus der absoluten Messunsicherheit bei der Messung des elektrischen Statuswiderstands als Zähler und dem Soll-Statuswiderstand nach IEC 61851 als Nenner.

Vorzugsweise ist der Adapter zum Identifizieren des Ladestromempfängers anhand des Ladestromempfänger-Messwerts ausgebildet.

Gemäß einer bevorzugten Ausführungsform entspricht das Aufnahme-Steckerteil der Norm IEC 62196. Es hat vorzugsweise (i) drei Leistungsaufnahme-Pole zum Übertragen jeweils einer Wechselstromphase oder von Gleichstrom, (ii) einen Aufnahmeteil-Schutzleiter-Pol, (iii) einen Aufnahmeteil- Nullleiter, (iv) Proximity-Kontakt-Pol und (v) einen Pilotkontakt-Pol,

Gemäß einer bevorzugten Ausführungsform entspricht das Abgabe-Steckerteil der Norm IEC 62196. Es hat vorzugsweise (i) drei Leistungsabgabe-Pole zum Übertragen jeweils einer Wechselstromphase oder von Gleichstrom, (ii) einen Abgabeteil-Schutzleiter-Pol, (iii) einen Abgabeteil-Nullleiter-Pol, (iv) einen Abgabeteil-Proximity-Kontakt und (v) einen Abgabeteil-Pilotkontakt.

Vorzugsweise ist der Widerstandsmesser verschaltet zum Messen des ersten Ladestromempfänger-Messwerts in Form eines ohmschen oder komplexwertigen Statuswiderstands zwischen dem Schutzleiter PE und dem Pilotkontakt des Ladestromempfängers.

Vorzugsweise ist die Steuereinheit eingerichtet zum automatischen Messen des Ladestromempfänger-Messwerts vor dem Abgeben des Ladestroms durch die Ladevorrichtung.

Günstig ist es, wenn die Steuereinheit einen Ladestrommesser zum zeitaufgelösten Bestimmen der elektrischen Stromstärke aufweist und ausgebildet ist zum automatischen Erfassen eines Ladestromempfänger-Messwerts in Form der Stromstärke und zudem einen Ladespannungsmesser zum automatischen Erfassen eines Ladestromempfänger-Messwerts in Form der aufgelösten Spannung. Alternativ kann die Steuereinheit einen Leistungsmesser aufweisen, der ausgebildet ist zum Bestimmen der elektrischen Leistung, die durch den Adapter fließt, wobei die Steuereinheit dann ausgebildet ist zum automatischen Erfassen eines Ladestromempfänger-Messwerts in Form der Leistung.

Unter der Leistung wird insbesondere die Momentanleistung verstanden. Es kann sich dabei um einen gleitenden Mittelwert oder einen zeitlich aufgelösten Verlauf einer Ladeleistungskurve oder einen daraus abgeleiteten Parameter handeln.

Vorzugsweise ist der Leistungsmesser oder sind der Ladestromesser und der Ladespannungsmesser geeicht. Hierunter wird insbesondere verstanden, dass der Adapter einen Kalibrierschein aufweist, in dem eine Messunsicherheit bestätigt ist, die sich auf die jeweilige gesetzliche Einheit bezieht.

Vorzugsweise erfolgt das Erfassen der Stromstärken und der Spannung mit einer zeitlich so hohen Auflösung, dass eine Phase zwischen Strom und Spannung bestimmbar ist. Die Phase wird insbesondere durch den Phasenwinkel ϕ beschrieben. Auf diese Weise können Scheinleistung und Wirkleistung erfasst werden. Die Steuereinheit ist dann vorzugsweise eingerichtet zum automatischen Erfassen eines Ladestromempfänger-Messwerts in Form der, vorzugsweise zeitabhängig erfassten, Phase und/oder der Scheinleistung und/oder der Wirkleistung.

Vorzugsweise ist die Steuereinheit ausgebildet zum automatischen Erfassen zumindest eines weiteren Ladestromempfänger-Messwerts in Form der Stromart. In anderen Worten wird erfasst, ob mit Gleichstrom oder Wechselstrom geladen wird.

Vorzugsweise ist die Steuereinheit ausgebildet zum automatischen Erfassen zumindest eines weiteren Ladestromempfänger-Messwerts in Form einer Anzahl an zum Laden verwendeten Phasen. Elektroautos unterscheiden sich hinsichtlich der zum Laden verwendeten Anzahl an Phasen. Häufig kann daher bereits dadurch ein missbräuchliches Laden ausgeschlossen werden, dass die Zahl der zum Laden verwendeten Anzahl an Phasen ermittelt wird.

Vorzugsweise ist die Steuereinheit ausgebildet zum automatischen Erfassen zumindest eines weiteren Ladestromempfänger-Messwerts in Form eines Diodenparameters, der einen parasitären Effekt einer Diode beschreibt. Unter einem parasitären Effekt wird eine Abweichung einer elektrischen Größe, insbesondere des elektrischen Widerstands, der elektrischen Kapazität oder der Induktivität, einer Diode von einer idealen Diode verstanden. Der Diodenparameter, der den parasitären Effekt der Diode beschreibt, kann beispielsweise dadurch gemessen werden, dass, wenn eine Rechteckspannung mit einer Frequenz von zumindest 500 Hz zwischen zwei Polen des Adapters angelegt ist, von der Steuereinheit die Verzerrung des Signals vermessen wird. Vorzugsweise hat die Rechteckspannung eine Amplitude von 12 (±1) Volt.

Verschiedene Diodenparameter werden unten in der Figurenbeschreibung erläutert, wobei die jeweiligen Diodenparameter unabhängig voneinander bestimmt werden können. Die Bestimmung des zumindest einen Diodenparameters ist zudem unabhängig von der konkreten Ausgestaltung des Adapters.

Vorzugsweise ist die Steuereinheit eingerichtet zum automatischen, insbesondere kontinuierlichen Senden des zumindest einen Ladestromempfänger-Messwerts an den Kontrollrechner. Das ermöglicht es dem Kontrollrechner, kontinuierlich zu überprüfen, ob weiterhin ein berechtigter Ladeempfänger an der Ladevorrichtung angeschlossen ist.

Alternativ oder zusätzlich ist die Steuereinheit eingerichtet zum automatischen Vergleichen des zumindest einen Ladestromempfänger-Messwerts mit zumindest einem Sollwert und, wenn der Ladestromempfänger-Messwert und der Sollwert nicht übereinstimmen, Senden eines Steuersignals an die Ladevorrichtung, sodass die elektrische Leistung, insbesondere auf null, gedrosselt wird und/oder Anzeigen eines Warnsignals, das kodiert, dass ein unzulässiger Ladestromempfänger an den Adapter angeschlossen ist. Der Sollwert ist, insbesondere dauerhaft, im Adapter gespeichert und/oder wird von der Steuereinheit von einem Speicher außerhalb des Adapters ausgelesen.

Das Senden eines Steuersignals an die Ladevorrichtung, sodass die elektrische Leistung, insbesondere auf null, gedrosselt wird, umfasst vorzugsweise den Schritt Herausschalten zumindest eines Signal-Widerstands, sodass sich ein Widerstand zwischen dem Schutzleiter und einem Ladevorrichtung-Pilotkontakt so ändert, dass die Ladevorrichtung die Ladeleistung, insbesondere auf null, reduziert.

Günstig ist es, wenn der Adapter einen Temperatursensor zum Messen einer Temperatur aufweist. Der elektrische Widerstand eines ohmschen Widerstandselements ist von der Temperatur abhängig. Um eine Aussage darüber treffen zu können, ob ein elektrischer Widerstand einem Sollwert entspricht, ist es daher vorteilhaft, die Temperatur des Widerstands oder zumindest einer Umgebung des Widerstands zu kennen. Dadurch wird die Wahrscheinlichkeit erhöht, dass ein Ladestromempfänger korrekt identifiziert werden kann.

Vorzugsweise ist die Steuereinheit ausgebildet zum automatischen (a) Empfangen einer Warnmeldung vom Kontrollrechner und (b) wenn die Warnmeldung erhalten wird, Senden eines Steuersignals an die Ladevorrichtung, sodass die abgegebene elektrische Leistung, insbesondere auf null, gedrosselt wird und/oder Anzeigen eines Warnsignals, dass kodiert, dass ein unzulässiger Ladestromempfänger an den Adapter angeschlossen ist. In diesem Fall wird der Vergleich des zumindest einen ermittelten Ladestromempfänger-Messwerts mit dem Sollwert im Kontrollrechner durchgeführt und das Ergebnis an den Adapter übertragen.

Vorzugsweise besitzt der Adapter einen Energiespeicher, der mit der Steuereinheit zur Versorgung mit elektrischer Energie verbunden ist. Bei diesem Energiespeicher handelt es sich vorzugsweise um einen Akkumulator. Der Akkumulator wird vorzugsweise beim Anschließen des Adapters an die Ladevorrichtung aufgeladen, das ist aber nicht notwendig.

Günstig ist es, wenn der Adapter einen digitalen Speicher aufweist, in dem zunächst ein Ladestromempfänger-Sollwert gespeichert ist, wobei die Steuereinheit ausgebildet ist zum automatischen Vergleichen des zumindest einen Ladestromempfänger-Messwerts mit dem zumindest einen Ladestromempfänger-Sollwert und Senden einer Warnmeldung an die Ladevorrichtung oder den Kontrollrechner, wenn der zumindest eine Ladestromempfänger-Messwert nicht mit dem zumindest einen Ladestromempfänger-Sollwert übereinstimmt. In diesem Fall kann der Adapter als digitaler Elektroautoausweis fungieren.

Vorzugsweise entspricht das Aufnahme-Steckerteil der Norm IEC 62196, Stand 2020-02. Alternativ oder zusätzlich umfasst das Abgabe-Steckerteil der Norm IEC 62196, Stand 2020-02.

Vorzugsweise besitzt das Abgabe-Steckerteil drei Leistungs-Pole zum Übertragen jeweils einer Wechselstromphase oder von Gleichstrom, einen Schutzleiter (PE), einen Nullleiter, einen Ladeempfänger-Proximity-Kontakt und einen Ladeempfänger-Pilotkontakt nach der Norm DIN EN IEC 61851, Stand 1. Dezember 2021.

Vorzugsweise ist in dem digitalen Speicher zudem eine digitale Signatur hinterlegt, die den Adapter eindeutig gekennzeichnet. Günstig ist es, wenn die Steuereinheit ausgebildet ist zum automatischen Senden eines Identifikationswerts, der den Adapter eindeutig, insbesondere eineindeutig, kodiert. Auf diese Weise kann der Kontrollrechner nachverfolgen, mit welchem Adapter ein Ladestromempfänger geladen wurde. Das ermöglicht es, das Entgelt für den Ladestrom, dass an den Betreiber der Ladevorrichtung gezahlt werden soll, dem richtigen Adapter zuzuordnen.

Vorzugsweise ist die Steuereinheit ausgebildet zum automatischen Empfangen einer Empfängerkennung, die den Ladestromempfänger eindeutig, insbesondere eineindeutig, kodiert und/oder einer Ladevorrichtung-Kennung, die die Ladevorrichtung eindeutig, insbesondere eineindeutig, kodiert. Auf diese Weise kann die Steuereinheit erfassen, welcher Ladestromempfänger geladen werden soll und/oder durch welche Ladevorrichtung geladen werden soll. Insbesondere ist die Steuereinheit oder der Kontrollrechner ausgebildet zum Überprüfen, ob der gemessene Ladestromempfänger-Messwert der Empfängerkennung zugeordnet ist. Ist das nicht der Fall, besteht der Verdacht, dass eine andere Vorrichtung als der berechtigte Ladestromempfänger geladen werden soll, und es kann eine Warnmeldung ausgegeben werden oder das Laden beendet werden.

Günstig ist es, wenn die Steuereinheit eine Echtzeituhr aufweist und ausgebildet ist zum automatischen Versehen des Ladestromempfänger-Messwerts mit einem Zeitstempel auf Basis der von der Echtzeituhr gemessenen Zeit. Auf diese Weise ist der Zeitpunkt des Ladens manipulationssicher festgehalten.

Vorzugsweise besitzt die Steuereinheit einen Satellitennavigationssystemempfänger und ist ausgebildet zum automatischen Versehen des Ladestromempfänger-Messwerts mit einem Positionsstempel. So ist der Ort des Ladens manipulationssicher festgehalten.

Günstig ist es, wenn die Steuereinheit eingerichtet ist zum automatischen Empfangen eines Freigabebefehls vom Kontrollrechner und zum Ansteuern der Ladevorrichtung, sodass diese elektrische Ladeleistung abgibt, nur dann, wenn der Freigabebefehl empfangen wurde. In anderen Worten ermittelt die Steuereinheit zunächst den Ladestromempfänger-Messwert, erfasst danach, ob der Ladestromempfänger-Messwert zum Empfang von Ladeleistung berechtigt ist und steuert anschließend die Ladevorrichtung nur dann zum Abgeben der Ladeleistung an, wenn dies der Fall ist.

Günstig ist es, wenn der Adapter eine mechanische Verriegelungsvorrichtung zum Verriegeln des Adapters mit der Ladevorrichtung und/oder dem Ladestromempfänger aufweist. In diesem Fall ist es entbehrlich, den Adapter, beispielsweise mit der Hand, am Platz zu halten. Vielmehr muss der Adapter lediglich mit der Ladevorrichtung und dem Ladestromempfänger verbunden werden, um dauerhaft am Platz zu verbleiben.

Diese Verriegelungsvorrichtung kann entweder manuell betätigt werden oder über einen elektromagnetischen Aktuator. Diese Ausführungsform ist insbesondere vorteilhaft, wenn eine (semi-) öffentliche Ladeeinrichtung oder eine Wallbox ohne Identifizierungs- und Abrechnungsfunktionen mit solchen Funktionen nachgerüstet werden soll.

Ein erfindungsgemäßes Ladesystem besitzt vorzugsweise (a) zumindest zwei Ladevorrichtungen und (b) zumindest zwei erfindungsgemäße Adapter. Vorzugsweise ist (c) der Kontrollrechner ausgebildet ist zum automatischen (i) Erfassen einer maximalen Gesamt-Ladeleistung, (ii) Senden, insbesondere drahtloses Senden, von Erstadapter-Daten an den ersten Adapter, der eine Erstadapter-Ladeleistung kodiert, und (iii) Senden, insbesondere drahtloses Senden, von Zweitadapter-Daten an den zweiten Adapter, der eine Zweitadapter-Ladeleistung kodiert, (iv) wobei die Summe der Adapter-Ladeleistungen höchstens der Gesamt-Ladeleistung entspricht. Auf diese Weise ist sichergestellt, dass die vorgegebene Gesamt-Ladeleistung nicht überschritten wird. Ist beispielsweise das Ladesystem mit einem weiteren elektrischen Verbraucher zusammengeschaltet, der nicht ständig elektrische Leistung abgreift, dessen Funktion aber eine höhere Priorität hat, so steht für das Laden eine zeitabhängige maximale Ladeleistung zur Verfügung. Durch dieses Ladesystem wird erreicht, dass diese stets gut ausgenutzt wird.

Günstig ist es, wenn der Adapter ausgebildet ist auf Anweisung des Kontrollrechners oder der Ladevorrichtung folgende Schritte durchzuführen: (a) Anlegen einer pulsweitenmodulierten Rechteckspannung durch einen Signalgenerator zwischen dem Schutzleiter und einem Ladeempfänger-Pilotkontakt, mit einem Tastgrad (der Pulsweitenmodulation), sodass der Tastgrad die Adapter-Ladeleistung kodiert und der Ladestromempfänger seine Ladeleistungsanforderung auf höchstens die Adapter-Ladeleistung ändert, und (b) Erfassen, ob der Ladestromempfänger seine Ladeleistungsanforderung auf höchstens die Adapter-Ladeleistung geändert hat und verneinendenfalls Herausschalten eines Signal-Widerstands.

Günstig ist es, wenn das Erfassen der maximalen Gesamt-Ladeleistung sowie das Senden der Adapter-Daten an die zumindest zwei Adapter kontinuierlich erfolgt, also in so kurzen Zeitabständen, dass bei einer Änderung der maximalen Gesamt-Ladeleistung die Änderung der Adapter-Ladeleistungen so schnell erfolgt, dass eine Sicherung, mit der das Ladesystem gegen Überlast abgesichert ist, nicht anschlägt.

Günstig ist es, wenn ein erfindungsgemäßer Adapter ausgebildet ist zum drahtlosen Kommunizieren mit zumindest einem anderen Stromverbraucher.

Es ist günstig, wenn die Steuereinheit ausgebildet ist zum automatischen Senden einer Ladevorrichtungskennung, die die Ladevorrichtung eindeutig kennzeichnet, an den Kontrollrechner. Die Steuereinheit hat diese Ladevorrichtungskennung beispielsweise von der Ladevorrichtung empfangen.

Alternativ oder zusätzlich ist es günstig, wenn die Steuereinheit ausgebildet ist zum automatischen Senden einer Adapterkennung, die den Adapter eindeutig kennzeichnet, an den Kontrollrechner.

Erfindungsgemäß ist zudem eine Anlage mit einem Ladesystem, das zumindest eine Ladevorrichtung und zumindest einen erfindungsgemäßen Adapter und einen elektrischen Verbraucher, der vorzugsweise kein Ladegerät ist, aufweist, wobei der zumindest eine Adapter ausgebildet ist zum drahtlosen Kommunizieren mit dem elektrischen Verbraucher und zum automatischen Reduzieren der von der Ladevorrichtung angeforderten Ladeleistung, wenn der elektrische Verbraucher dem Adapter eine erhöhte Leistungsaufnahme mitteilt, und ohne das Reduzieren der von der Ladevorrichtung angeforderten Ladeleistung eine vorgegebene maximale Gesamt-Ladeleistung aus der Leistungsaufnahme des elektrischen Verbrauchers und des zumindest einen Adapters überschritten würde.

Das Identifizieren des Elektrofahrzeugs anhand des zumindest einen Ladestromempfänger-Messwerts umfasst vorzugsweise ein Vergleichen des zumindest einen Ladestromempfänger-Messwerts mit Datenbank-Einträgen einer Datenbank, in der Ladestromempfänger-Soll-Messwerte mit jeweils einem Identifikationsparameter verknüpft sind und ein Identifizieren des Elektrofahrzeugs mittels des Identifikationsparameters, dessen zugeordneter zumindest einer Ladestromempfänger-Soll-Messwert die kleinste Abweichung zum Ladestromempfänger-Messwert hat. In anderen Worten existiert eine Datenbank, in der für jedes Elektrofahrzeug die diejenigen Ladestromempfänger-Messwerte abgelegt sind, die bei einer Messung bei 23°C, 1013 hPa und 70% relativer Luftfeuchtigkeit zu erwarten sind. Es ist möglich, dass in der Datenbank Ladestromempfänger-Messwerte in Abhängigkeit von der Temperatur gespeichert sind und der Adapter die Temperatur misst.

Die Datenbank kann im Adapter oder auf einem vom Adapter räumlich getrennten digitalen Speicher eines Kontrollrechners gespeichert sein. Das Identifizieren kann beispielsweise ein Feststellen sein, ob das Elektrofahrzeug, dem der zumindest eine Ladestromempfänger-Messwert entspricht, zum Laden berechtigt ist.

Im Folgenden wird die Erfindung anhand der beigefügten Zeichnungen näher erläutert. Dabei zeigt
- Figur 1: eine schematische Ansicht eines erfindungsgemäßen Ladesystem und
- Figur 2: in der Teilfigur 2b eine Ansicht auf eine erste Stirnseite eines erfindungsgemäßen Adapters des Ladesystem gemäß Figur 1, in der Teilfigur 2a eine Ansicht auf die zweite Stirnseite des Adapters und in der Teilfigur 2c eine Ansicht auf die Längsseite des Adapters und
- Figur 3: ein Blockschaltbild eines erfindungsgemäßen Adapters.

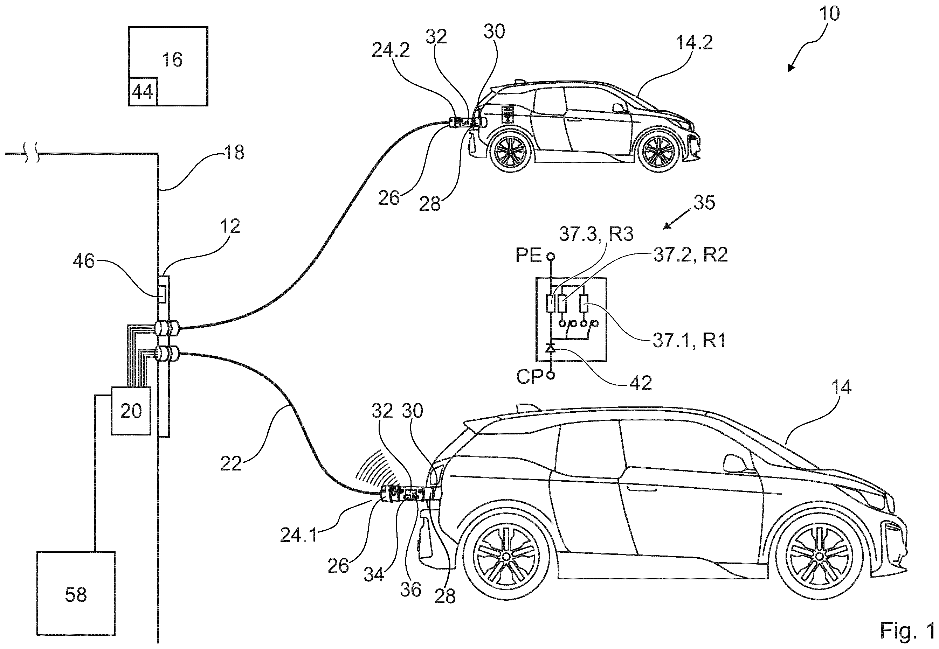

Figur 1 zeigt ein erfindungsgemäßes Ladesystem 10, das eine Ladevorrichtung 12 zum Laden eines Ladestromempfängers 14, einen Adapter 24.1 sowie einen Kontrollrechner 16 aufweist. Der Ladestromempfänger 14 ist im vorliegenden Fall ein Elektrofahrzeug. Die Ladevorrichtung 12 ist beispielsweise an ein Hausnetz eines Gebäudes 18, insbesondere eines Wohn- und/oder Bürogebäudes angeschlossen. Im Gebäude 18 ist ein Energiezähler 20 zum Erfassen der elektrischen Energie vorhanden, die im Gebäude 18 umgesetzt wird. Der Energiezähler 20 kann Teil des Ladesystems 10 sein.

Die Ladevorrichtung 12 umfasst eine Ladeleitung 22, mittels der ein Ladestrom I an den Ladestromempfänger 14 übertragen werden kann. Zwischen der Ladeleitung 22 und dem Ladestromempfänger, im vorliegenden Fall dem Elektrofahrzeug, ist der erfindungsgemäße Adapter 24.1 angeordnet.

Der erfindungsgemäße Adapter 24.1 besitzt ein Aufnahme-Steckerteil 26 zum Verbinden mit der Ladevorrichtung 12, ein Abgabe-Steckerteil 28 zum Verbinden mit einem Ladeanschluss 30 des Ladestromempfängers 14 sowie eine Steuereinheit 32. Die Steuereinheit 32 besitzt eine Kommunikationseinheit 34, mittels der der Adapter 24.1 mit dem Kontrollrechner 16 Informationen austauschen kann.

Der Ladestromempfänger 14, insbesondere das Elektrofahrzeug, besitzt eine Ladesteuerungsschaltung 35 nach DIN EN IEC 61851, die eine Diode 42 sowie drei Signal-Widerstände 37.1, 37.2, 37.3 mit entsprechenden ohmschen Widerständen R1, R3 und R3, die zum Erzeugen eines variablen elektrischen Widerstands zwischen einem Schutzleiter PE und einem Pilotkontakt CP des Ladeanschlusses 30 verschaltet sind. Um den ohmschen Widerstand zwischen dem Schutzleiter PE und dem Pilotkontakt CP zu verändern, werden die Widerstände 37.1, 37.2, 37.3 mittels einer Steuerschaltung des Ladestromempfängers 14 miteinander verschaltet.

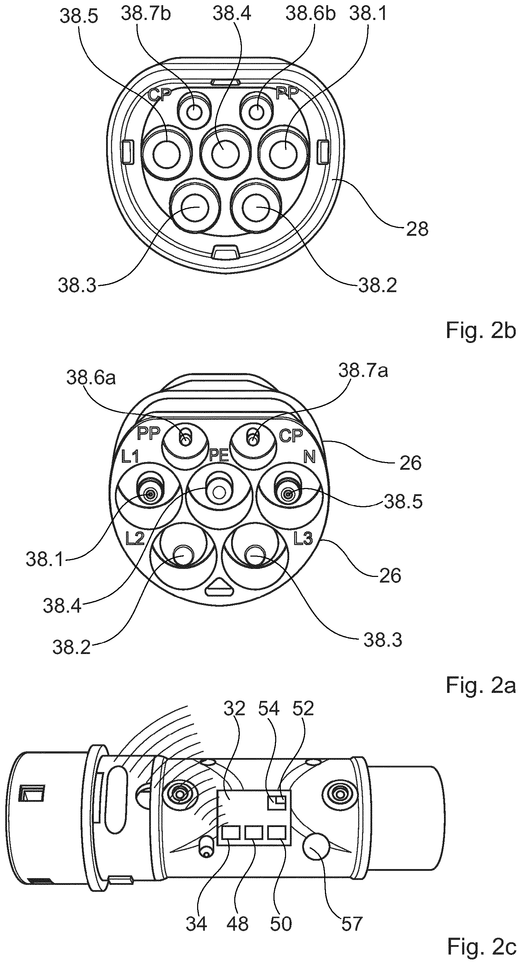

Figur 2b zeigt eine Ansicht auf ein Abgabe-Steckerteil 28 des Adapters 24.1. Es ist zu erkennen, dass das Abgabe-Steckerteil 28 mehrere Pole 38.ja (j = 1, 2, 3, 4, 5), 38. 6b, 38.7b aufweist. Die Pole 38.1a, 38.2a und 38.3 übertragen jeweils eine Wechselstromphase oder Gleichstrom. Der Pol 38.4 ist der Schutzleiter (PE), der Pol 38.5 der Nullleiter. Der Pol 38.6b ist ein Ladeempfänger-Proximity-Kontakt. Der Pol 38.7b ist ein Ladeempfänger-Pilotkontakt (CP, contact pilot) nach der Norm DIN EN IEC 61851 (und DIN EN 62196), Stand 2019-12.

Figur 2a zeigt eine Ansicht auf das Aufnahme-Steckerteil 26 des Adapters 24.1. Die Pole 38.1, 38.2 und 38.3 können jeweils eine Wechselstromphase oder Gleichstrom übertragen. Der Pol 38.4 ist der Schutzleiter (PE), der Pol 38.5 der Nullleiter. Die Pole 38.1, 38.2, 38.3, 38.4, 38.5 des Aufnahme-Steckerteils 26 liegen auf dem gleichen Potential wie die entsprechenden Pole des Abgabe-Steckerteils 28.

Der Pol 38.6a des Aufnahme-Steckerteils 26 ist der Proximity-Kontakt (PP). Der Pol 38.7a des Aufnahme-Steckerteils 26 ist der Pilotkontakt (CP, contact pilot) nach der Norm DIN EN IEC 61851 (und DIN EN 62196), Stand 2019-12. Die Pole 38.6a und 38.7a liegen nicht notwendigerweise auf dem gleichen Potential.

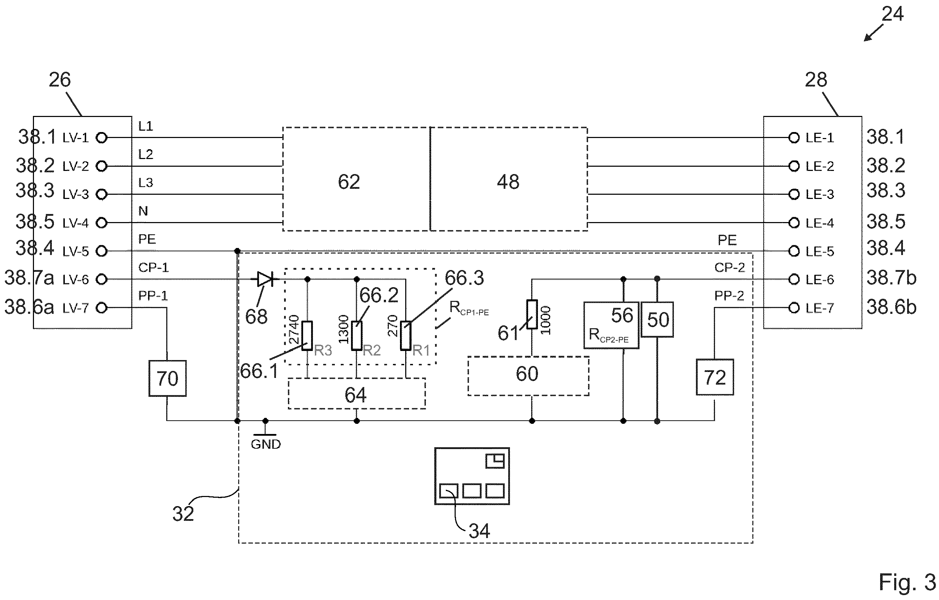

Der in Figur 3 gezeigte Widerstandsmesser 56 ist eingerichtet zum Messen eines ersten Ladestromempfänger-Messwerts M₁ in Form eines ohmschen Statuswiderstands R_{CP2-PE} zwischen den Polen 38.7b (CP ≙ CP-2) und 38.4 (also dem Schutzleiter PE).

Gemäß der genannten Norm erzeugt das Elektrofahrzeug 14 ohmsche Widerstandswerte, beispielsweise durch Schalten der Signal-Widerständen 37.1, 37.2, 37.3 (R1, R2, R3). Der erste Signal-Widerstand 37.1 hat einen ersten ohmschen Widerstandswert R1, der zweite Signal-Widerstand 37.2 hat einen zweiten ohmschen Widerstandswert R2 und der dritte Signal-Widerstand 37.3 hat einen dritten ohmschen Widerstandswert R3.

Der resultierende Statuswiderstand zwischen den Polen 38.7b (CP2) und 38.4 (PE) dient zur Modusauswahl. Die ohmschen Widerstände haben im Idealfall die in der folgenden Tabelle dargelegten Werte, wobei reale Abweichungen zwischen dem gemessenen Gesamtwiderstand und dem idealen Statuswiderstand durch die angegeben Toleranz berücksichtigt werden:

| Parameter | | Mindestwert | Soll-Wert | Maximalwert |
|---|---|---|---|---|
| dritter Widerstand | R3 | 2658 Ω | 2740 Ω | 2822 Ω |
| zweiter Widerstand | R2 | 1261 Ω | 1261 Ω | 1339 Ω |
| erster Widerstand | R1 | 261,9 Ω | 270 Ω | 278,1 Ω |
| Spannungsabfall der Diode ( bei 2,75 mA bis 10 mA) | Ud | 0,55 V | 0,7 V | 0,85 V |

Es ist zu erkennen, dass der Toleranzbereich für die Widerstände groß ist. Der tatsächliche Wert der Widerstände R1, R2 und R3 ist jedoch für jedes Elektrofahrzeug zeitlich stabil, aber potentiell temperaturabhängig. Durch das Messen eines Ladestromempfänger-Messwerts M₁ in Form des Statuswiderstands R_{CP2-PE} mit einer relativen Messunsicherheit von höchstens 10⁻² kann daher mit hoher Sicherheit festgestellt werden, ob das angeschlossene Elektrofahrzeug 14 von einem erwarteten angeschlossenen Elektrofahrzeug 14 abweicht. Statuswiderstands R_{CP2-PE} erfolgt mittels des Widerstandsmessers 56.

Vorzugsweise ist der Signalspannungsmesser 50 ausgebildet zum Messen eines zweiten Ladestromempfänger-Messwerts M₂ in Form eines Diodenparameters D, der einen parasitären Effekt der Diode 42 im Elektrofahrzeug 14 (siehe Figur 1) beschreibt. Dazu gibt ein Signalgenerator 60 des Adapters 24.1 eine Rechteckspannung Uᵣ über einen Vorwiderstand 61 von beispielsweise 1 kΩ ab, die zwischen den Polen 38.7b und 38.4 anliegt. Die Rechteckspannung ist beispielsweise so gewählt, dass sie zwischen -12 Volt und +12 Volt liegt. Ein Signalspannungsmesser 50 misst die resultierende Spannung U_{CP2-PE} zwischen dem Schutzleiter PE und dem Ladeempfänger-Pilotkontakt 38.7b.

Die Steuereinheit 32 ist mit dem Signalspannungsmesser 50 verbunden und ermittelt die Differenzspannung ΔU zwischen der Rechteckspannung Uᵣ und der resultierenden Spannung UCP2-PE. Vorzugsweise werden die Spannungen Uᵣ und UCP2-PE dazu so normiert, dass im Falle einer idealen Diode die Differenz null ist.

Aus der Differenzspannung ΔU wird der Diodenparameter D beispielsweise dadurch berechnet, dass das erste Moment, das zweite Moment, das dritte Moment und/oder das vierte Moment bestimmt wird.

Das n-te Moment berechnet sich als das Integral über das Produkt aus der von der Zeit t abhängigen Differenzspannung ΔU(t) und tⁿ, also *∫* ΔU(t)tⁿ dt.

Insbesondere kann die Steuereinheit 32 mehrere Ladestromempfänger-Messwerte Mₖ in Form von zumindest zwei Diodenparametern erfassen, beispielsweise das erste und das zweite Moment der Differenzspannung.

Alternativ oder zusätzlich erzeugt die die Steuereinheit 32 aus dem zeitlichen Verlauf I(t) des Ladestroms I ein Ladestromempfänger-Messwerte Mₖ in Form von Sprungzeitpunkten von Ladestromsprüngen und/oder deren Sprunghöhe. Derartige Ladestromsprünge und/oder deren Sprunghöhe werden beispielsweise mittels einer Change-Point-Analyse, beispielsweise basierend auf einem kumulativen Summen-Verfahren bestimmt. Ladestromsprünge entstehen bei Anpassung des Ladestroms durch den Ladestromempfänger, um die ideale Ladekurve für das Akkusystem sicherzustellen oder aus technischen Gründen zu Beginn des Ladevorgangs. Die Sprunghöhe hängt dabei unter anderem vom Zustand des Akkusystems des Elektrofahrzeugs ab oder von den einzelnen Systemen die zu Beginn des Ladevorgangs nacheinander eingeschaltet werden (z. B. Kühlsysteme). Die Kombination aus Sprungzeitpunkt und Sprunghöhe ist damit abhängig von der individuellen Bauart und Ausstattung des Ladestromempfängers und bietet daher eine weitere Möglichkeit zur Identifikation des Ladestromempfängers.

Die Steuereinheit 32 erfasst die Ladestromempfänger-Messwerte Mₖ und sendet sie mittels der Kommunikationseinheit 34 an den Kontrollrechner 16. Der Kontrollrechner 16 besitzt einen digitalen Speicher 44, in dem eine Datenbank gespeichert ist. In der Datenbank sind Ladestromempfänger-Sollwerte M_{K,soll} gespeichert, die zu Fahrzeugen gehören, für die die Entnahme von Ladeleistung der Ladevorrichtung 12 zulässig ist.

Der Kontrollrechner 16 vergleicht die empfangenen Ladestromempfänger-Messwerte Mₖ mit den Ladestromempfänger-Sollwerten M_{K,soll}. Existieren Ladestromempfänger-Sollwerte M_{K,soll}, die im Rahmen einer als tolerabel vorgegebenen Abweichung mit den empfangenen Ladestromempfänger-Messwerte Mₖ übereinstimmen, so sendet der Kontrollrechner 16 eine Freigabemeldung entweder an den Adapter 24.1 oder an die Ladevorrichtung 12, die dazu ebenfalls über eine drahtlose Kommunikationseinheit 46 verfügt. Fordert der Ladestromempfänger 14 Ladeleistung von der Ladevorrichtung 12 ab, so wird diese von der Ladevorrichtung 12 bereitgestellt.

Es ist möglich und gemäß einer bevorzugten Ausführungsform vorgesehen, nicht aber notwendig, dass die Ladevorrichtung 12 und/oder der Adapter 24 nach dem Laden des Ladestromempfängers 14 eine Nachricht an den Kontrollrechner 16 schickt, in der Kosten kodiert sind, die das Laden versursacht hat.

Alternativ oder zusätzlich ist es günstig, wenn die Steuereinheit 32 ausgebildet ist zum automatischen Senden einer Ladevorrichtungskennung K₁₂, die die Ladevorrichtung 12 eindeutig kennzeichnet, an den Kontrollrechner 16. Die Steuereinheit 32 hat diese Ladevorrichtungskennung beispielsweise von der Ladevorrichtung 12 empfangen.

Alternativ oder zusätzlich ist es günstig, wenn die Steuereinheit 32 ausgebildet ist zum automatischen Senden einer Adapterkennung K₂₄, die den Adapter eindeutig kennzeichnet, an den Kontrollrechner 16.

Der Adapter 24.1 kann einen Ladestrommesser 48 zum zeitaufgelösten Messen des Ladestroms I und einen Ladespannungsmesser 62 zum zeitaufgelösten Messen der Spannung U aufweisen, um zeitaufgelöst die Ladeleistung P zu bestimmen. Aus der zeitaufgelöst gemessenen Ladeleistung P wird die elektrische Gesamtenergie W_{ges} berechnet, die von der Ladevorrichtung 12 übertragen wurde. Nach dem Beenden des Ladens kann der Adapter 24.1 die Gesamtenergie W_{ges} an den Kontrollrechner 16 übermitteln.

Günstig, nicht aber notwendig, ist es, wenn der Adapter 24.1 eine Echtzeituhr 52 aufweist, die beispielsweise Teil eines Satellitennavigationssystemempfängers 54 ist. In diesem Fall wird die Nachricht des Adapters an den Kontrollrechner, der die elektrische Gesamtenergie W_{ges} kodiert, vorzugsweise mit einem Zeitstempel und/oder einem Zeit-und Positionsstempel versehen. So wird eine revisionssichere Abrechnung des Ladestroms ermöglicht.

Der Adapter 24.1 kann zudem eine Anzeige 57, beispielsweise in Form einer optischen Anzeige, aufweisen, die angibt, ob eine Freigabemeldung erhalten wurde.

Figur 1 zeigt, dass das Ladesystem 10 einen zweiten Adapter 24.2 zum Laden eines zweiten Ladestromempfängers 14.2 umfassen kann. Es ist zudem möglich, dass das Ladesystem 10 eine zweite Ladevorrichtung aufweist, die jedoch nicht eingezeichnet ist. Zudem kann das Ladesystem 10 einen elektrischen Verbraucher 58 aufweisen, der insbesondere keine Ladevorrichtung ist. Der elektrische Verbraucher 58 wird hinsichtlich der Leistungsaufnahme als prioritär betrachtet.

Nach Verbinden den Adapters 24.1 mit dem Elektrofahrzeug 14 und der Ladevorrichtung 12 ermittelt zunächst die Steuereinheit 32 durch Auslesen einer ersten Kabelstromkodierwiderstandsschaltung 70 und einer zweiten Kabelstromkodierwiderstandsschaltung 72, die mit der Steuereinheit 32 verbunden sind, einen jeweiligen Kabelstromkodierwiderstand eines etwaig am entsprechenden Steckerteil 26, 28 angeschlossenen Verlängerungskabels. Der Kabelstromkodierwiderstand kodiert den maximal zulässigen Strom, der über das Kabel übertragen werden darf.

Daraufhin steuert die Steuereinheit 32 die Kabelstromkodierwiderstandsschaltungen 70, 72 so an, dass der Ladevorrichtung 12 höchstens der maximal zulässige Strom signalisiert wird.

Danach ermittelt die Steuereinheit 32 den maximal zulässigen Ladestrom der Ladevorrichtung 12, indem eine Tastgradmessschaltung 64 den Tastgrad eines Rechtecksignals ermittelt, das von der Ladevorrichtung 12 an den Pol 38.7a (relativ zum Schutzleiter 38.4) abgegeben wird. Der Tastgrad ist das Verhältnis von Zeiten, zu denen bei der Rechteckspannung die Spannung anliegt, zu den Zeiten, in denen keine Spannung anliegt. Danach wird von der Steuereinheit 32 aus dem Tastgrad der maximal zulässige Ladestrom der Ladevorrichtung 12 ermittelt.

Der Widerstandsmesser 56 erfasst den vom Ladestromempfänger 14 angelegten Widerstand gemäß der oben angegebenen Tabelle. Daraus ermittelt die Steuereinheit 32, ob der Ladevorgang begonnen werden soll und ob eine Belüftung notwendig ist.

Die Tastgradmessschaltung 64 legt daraufhin zwischen die Pole 38.4 und 38.7a einen Widerstand R_{CP1-PE} an. Das erfolgt beispielsweise durch Verschalten von drei Widerstandselementen 66.1, 66.2, 66.3. Der Widerstand R_{CP1-PE} entspricht funktional dem vom Elektrofahrzeug angelegten Statuswiderstand R_{CP2-PE}. Wegen einer Adapter-Diode 68 entspricht die Charakteristik der Impedanz zwischen den Polen 38.4 und 38.7a der Impedanz, die der Ladestromempfänger 14, hier: das Elektrofahrzeug, aufweisen würde. Daher gibt die Ladevorrichtung 12 die vom Ladestromempfänger 14 angeforderte Ladeleistung ab.

Das Ladesystem 10 ist so ausgebildet, dass eine vorgegebene, änderbare Gesamt-Ladeleistung P_{ges,max} nicht überschritten wird. Sinkt die Gesamt-Ladeleistung, so sendet beispielsweise der Kontrollrechner 16 Erstadapter-Daten an den ersten Adapter 24.1, die eine Erstadapter-Ladeleistung P_{24.1} kodieren und Zweitadapter-Daten an den zweiten Adapter 24.2, die eine Zweitadapter-Ladeleistung P_{24.2} kodieren. Sind weitere Adapter vorhanden, über die eine Ladeleistung fließt, so werden entsprechende weitere Daten an den jeweiligen Adapter geschickt.

Daraufhin bewirken die Adapter 24.1, 24.2 eine Verminderung der aktuellen Ladeleistung. Dazu wird, wie oben beschrieben, mittels des Signalgenerators 60 eine Rechteckspannung generiert, die gemäß der Norm IEC 61851 die entsprechende Ladeleistung kodiert.

Die Gesamt-Ladeleistung kann beispielsweise dadurch sinken, dass der aktuelle Strompreis über eine vorgegebene Schwelle gestiegen ist und beispielsweise der Kontrollrechner 16 daraufhin die Gesamt-Ladeleistung nach unten anpasst, um Kosten zu sparen.

Es ist zudem möglich, dass die Gesamt-Ladeleistung sinkt, wenn der elektrische Verbraucher 58 seine Leistungsaufnahme erhöht. Durch das Vermindern der Gesamt-Ladeleistung wird damit verhindert, dass die Summe aus Leistungsaufnahme des elektrischen Verbrauchers 58 und der Ladeleistungen einen vorgegebenen Maximalwert überschreitet.

**Bezugszeichenliste**

| | | | |
|---|---|---|---|
| 10 | Ladesystem | 56 | Widerstandsmesser |
| 12 | Ladevorrichtung | 57 | Anzeige |
| 14 | Ladestromempfänger, Elektrofahrzeug | 58 | Verbraucher |
| | | 60 | Signalgenerator |
| 16 | Kontrollrechner | 61 | Vorwiderstand |
| 18 | Gebäude | 62 | Ladespannungsmesser |
| 20 | Energiezähler | 64 | Tastgradmessschaltung |
| 22 | Ladeleitung | 66 | Widerstandselement |
| 24 | Adapter | 68 | Adapter-Diode |
| 26 | Aufnahme-Steckerteil | 70 | Kabelstromkodierwiderstands-schaltung |
| 28 | Abgabe-Steckerteil | | |
| 30 | Ladeanschluss | 72 | Kabelstromkodierwiderstands-schaltung |
| 32 | Steuereinheit | | |
| 34 | Kommunikationseinheit | C₄₂ | Kapazität der Diode |
| 35 | Ladesteuerungsschaltung | D | Diodenparameter |
| 37 | Signal-Widerstand | i | Laufindex (Widerstandsele-mente) |
| 38 | Pol | | |
| 38.4 | Schutzleiter (PE) | j | Laufindex (Pole) |
| 38.6a | Ladevorrichtung-Proximity-Kontakt | k | Laufindex (Ladestromempfän-ger-Messwerte) |
| 38.6b | Ladeempfänger-Proximity-Kontakt | I | Ladestrom |
| | | Mₖ | Ladestromempfänger-Mess-wert |
| 38.7a | Ladevorrichtung-Pilotkontakt (CP-1) | | |
| | | P | Leistung, Ladeleistung |
| 38.7b | Ladeempfänger-Pilotkontakt | R_{CP1-PE} | Statuswiderstand |
| | (CP-2) | R_{CP2-PE} | Statuswiderstand |
| 42 | Diode | R1 | erster Signal-Widerstand |
| 44 | digitaler Speicher | R2 | zweiter Signal-Widerstand |
| 46 | Kommunikationseinheit | R3 | dritter Signal-Widerstand |
| 48 | Strommesser | t | Zeit |
| 50 | Signalspannungsmesser | U | Spannung |
| 52 | Echtzeituhr | W_{ges} | Gesamtenergie |
| 54 | Satellitennavigationssystemempfänger | | |

## Patentansprüche

1. Adapter (24.1), der ausgebildet ist zum Verbinden mit einer Ladevorrichtung (12) zum Abgeben eines Ladestroms (I) einerseits und mit einem mobilen Ladestromempfänger (14) zum Aufnehmen des Ladestroms (I) andererseits, mit
(a) einem Aufnahme-Steckerteil (26) zum Verbinden mit der Ladevorrichtung (12),
(b) einem Abgabe-Steckerteil (28) zum Verbinden mit einem Ladeanschluss (30) des Ladestromempfängers (14), das mit dem Aufnahme-Steckerteil (26) verbunden ist, und
(c) einer Steuereinheit (32), die
eine Kommunikationseinheit (34), die ausgebildet ist zum, insbesondere drahtlosen, Übertragen von Daten an einen vom Adapter (24.1) beabstandeten Kontrollrechner (16), aufweist,
**dadurch gekennzeichnet, dass**
(d) der Adapter sowohl vom Ladestromempfänger als auch von der Ladevorrichtung trennbar ausgebildet ist,
(e) die Steuereinheit (32) einen Widerstandsmesser (56) aufweist und ausgebildet ist zum Messen zumindest eines Ladestromempfänger-Messwerts (M₁)
(i) in Form eines elektrischen Statuswiderstands (R_{CP2-PE}) zwischen zumindest zwei Polen (38.4, 38.7b) des Abgabe-Steckerteils (28) mit einer relativen Messunsicherheit von höchstens 10⁻² und/oder
(ii) eines Diodenparameters (D), der eine Abweichung einer Übertragungsfunktion einer Diode (42) des Ladestromempfängers (14) von der Übertragungsfunktion einer idealen Diode beschreibt, wobei die Diode (42) Teil einer Ladesteuerungsschaltung (35) des Ladestromempfängers (14) ist.

2. Adapter (24.1) nach Anspruch 1, **dadurch gekennzeichnet, dass**
(a) der elektrische Statuswiderstand der elektrische Widerstand nach IEC 61851 zwischen dem Schutzleiter und dem Pilotkontakt des Ladeanschlusses des Ladestromempfängers ist,
(b) die relative Messunsicherheit die absolute Messunsicherheit bei der Messung des elektrischen Statuswiderstands geteilt durch den Soll-Statuswiderstand nach IEC 61851 ist, und
(c) der Adapter zum Identifizieren des Ladestromempfängers anhand des zumindest einen Ladestromempfänger-Messwerts (M1) ausgebildet ist.

3. Adapter nach einem der vorstehenden Ansprüche, **dadurch gekennzeichnet, dass**
(a) das Aufnahme-Steckerteil (26) der Norm IEC 62196 entspricht und
(i) drei Leistungsaufnahme-Pole (38.1, 38.2, 38.3) zum Übertragen jeweils einer Wechselstromphase oder von Gleichstrom,
(ii) einen Aufnahmeteil-Schutzleiter-Pol (38.4),
(iii) einen Aufnahmeteil- Nullleiter (38.5),
(iv) einen Aufnahmeteil- Proximity-Kontakt-Pol (38.6a) und
(v) einen Aufnahmeteil- Pilotkontakt-Pol (38.7a) aufweist,
(b) das Abgabe-Steckerteil (28) der Norm IEC 62196 entspricht und
(i) drei Leistungsabgabe-Pole (38.1, 38.2, 38.3) zum Übertragen jeweils einer Wechselstromphase oder von Gleichstrom,
(ii) einen Abgabeteil-Schutzleiter-Pol,
(iii) einen Abgabeteil-Nullleiter-Pol,
(iv) einen Abgabeteil-Proximity-Kontakt und
(v) einen Abgabeteil-Pilotkontakt aufweist,
(c) der Widerstandsmesser (56) verschaltet ist zum Messen des ersten Ladestromempfänger-Messwerts (M₁) in Form eines ohmschen oder komplexwertigen Statuswiderstands (R_{CP2-PE} ) zwischen dem Schutzleiter PE und dem Pilotkontakt des **Adapters.**

4. Adapter nach einem der vorstehenden Ansprüche, **dadurch gekennzeichnet, dass**
(a) die Steuereinheit (32) ausgebildet ist zum automatischen Erfassen zumindest eines Ladestromempfänger-Messwerts (Mₖ) in Form eines Diodenparameters (D), der eine Abweichung einer Übertragungsfunktion einer Diode (42) des Ladestromempfängers (14) von der Übertragungsfunktion einer idealen Diode beschreibt,
(b) wobei die Diode (42) Teil einer Ladesteuerungsschaltung (35) des Ladestromempfängers (14).

5. Adapter (24.1) nach einem der vorstehenden Ansprüche, **dadurch gekennzeichnet, dass** die Steuereinheit (32)
(a) einen Strommesser (48) zum zeitaufgelösten Bestimmen der elektrischen Stromstärke aufweist und ausgebildet ist zum automatischen Erfassen eines Ladestromempfänger-Messwerts (M₁) in Form der Stromstärke (I) und
einen Ladespannungsmesser (62) zum zeitaufgelösten Bestimmen der elektrischen Spannung (U) aufweist und ausgebildet ist zum automatischen Erfassen eines Ladestromempfänger-Messwerts (M₁) in Form der Spannung (U) oder
(b) einen Leistungsmesser zum zeitaufgelösten Bestimmen der elektrischen Leistung, die durch den Adapter (24.1) fließt, aufweist und ausgebildet ist zum automatischen Erfassen eines Ladestromempfänger-Messwerts (M₁) in Form der Leistung (P).

6. Adapter (24.1) nach einem der vorstehenden Ansprüche, **dadurch gekennzeichnet, dass** die Steuereinheit (32) ausgebildet ist zum automatischen Erfassen zumindest eines weiteren Ladestromempfänger-Messwerts (Mₖ) in Form
(a) der Stromart und/oder
(b) einer Anzahl an zum Laden verwendeten Phasen und/oder
(c) einer Phasenlage zwischen Strom und Spannung und/oder
(d) eines Diodenparameters (D), der einen parasitären Effekt einer Diode (42) bechreibt und/oder
(e) einen Ladekurvenparameter, der eine Ladestromkurve charakterisiert.

7. Adapter (24.1) nach einem der vorstehenden Ansprüche, **gekennzeichnet durch** einen Temperatursensor zum Messen einer Temperatur.

8. Adapter (24.1) nach einem der vorstehenden Ansprüche, **gekennzeichnet durch**
(a) einen digitalen Speicher, in dem zumindest ein Ladestromempfänger-Sollwert gespeichert ist,
(b) wobei die Steuereinheit (32) ausgebildet ist zum automatischen
(i) Vergleichen des zumindest einen Ladestromempfänger-Messwerts (M₁) mit dem zumindest einen Ladestromempfänger-Sollwert und
(ii) Senden einer Warnmeldung an die Ladevorrichtung (12) oder den Kontrollrechner (16), wenn der zumindest eine Ladestromempfänger-Messwert nicht mit dem zumindest einen Ladestromempfänger-Soll-wert übereinstimmt.

9. Adapter (24.1) nach einem der vorstehenden Ansprüche, **dadurch gekennzeichnet, dass** die Steuereinheit (32) ausgebildet ist zum automatischen
(a) Senden eines Identifikationswerts, der den Adapter (24.1) eindeutig, insbesondere eineindeutig, kodiert und
(b) Empfangen einer Empfängerkennung, die den Ladestromempfänger (14) eindeutig, kodiert und/oder einer Ladevorrichtungskennung, die die Ladevorrichtung (12) eindeutig kodiert und
(c) Senden der Empfängerkennung und/oder der Ladevorrichtungskennung an den Kontrollrechner (16).

10. Adapter (24.1) nach einem der vorstehenden Ansprüche, **dadurch gekennzeichnet, dass** die Steuereinheit (32)
(a) eine Echtzeituhr (52) aufweist und ausgebildet ist zum automatischen Versehen des zumindest einen Ladestromempfänger-Messwerts (M₁) mit einem Zeitstempel und/oder
(b) einen Satellitennavigationssystemempfänger (54) aufweist und ausgebildet ist zum automatischen Versehen des Ladestromempfänger-Messwerts (M₁) mit einem Positionsstempel.

11. Adapter (24.1) nach einem der vorstehenden Ansprüche, **dadurch gekennzeichnet, dass** die Steuereinheit (32) eingerichtet ist zum automatischen
(a) Empfangen eines Freigabebefehls vom Kontrollrechner (16) und
(b) Ansteuern der Ladevorrichtung (12), sodass diese elektrische Ladeleistung (P) abgibt, nur dann, wenn der Freigabebefehl empfangen wurde.

12. Ladesystem (10) mit
(a) zumindest einer Ladevorrichtung (12),
(b) zumindest einem Adapter (24.1) und
(c) einem vom zumindest einen Adapter (24.1) beabstandeten Kontrollrechner (16),
**dadurch gekennzeichnet, dass**
(d) der Adapter (24.1) nach einem der vorstehenden Ansprüche ausgebildet ist und
(e) das Ladesystem (10) ausgebildet ist zum
(i) Vergleichen des zumindest einen Ladestromempfänger-Messwerts (M₁) mit einem Ladestromempfänger-Sollwert zum Identifizieren des Ladestromempfängers anhand des Ladestromempfänger-Messwerts (M₁) und
(ii) Ausgeben einer Warnmeldung, wenn der Ladestromempfänger-Messwerts (M₁) nicht dem Ladestromempfänger-Sollwert entspricht und/oder
Ausgeben einer Freigabemeldung, wenn der Ladestromempfänger-Messwert nicht dem Ladestromempfänger-Sollwert entspricht.

13. Verfahren zum Identifizieren eines Elektrofahrzeugs (14) anhand von elektrischen Kenngrößen von Komponenten einer Ladesteuerungsschaltung des Elektrofahrzeugs.

14. Verfahren zum Identifizieren eines Elektrofahrzeugs (14) mit den Schritten
(i) Messen
- eines elektrischen Statuswiderstands (R_{CP2-PE}) des Elektrofahrzeugs (14) zwischen einem Schutzleiter (PE) eines Ladeanschlusses (30) nach IEC 61851 des Elektrofahrzeugs (14) und einem Pilotkontakt (CP) des Ladeanschlusses (30) und/oder
- eines Diodenparameters (D), der eine Abweichung einer Übertragungsfunktion einer Diode (42) einer Ladesteuerungsschaltung (35) des Elektrofahrzeugs (14) von der Übertragungsfunktion einer idealen Diode beschreibt,
sodass zumindest ein Ladestromempfänger-Messwert erhalten wird,
(ii) Identifizieren des Elektrofahrzeugs (14) anhand des zumindest einen Ladestromempfänger-Messwerts.

15. Verfahren nach Anspruch 14, **dadurch gekennzeichnet, dass** das Identifizieren des Elektrofahrzeugs (14) anhand des zumindest einen Ladestromempfänger-Messwerts die folgenden Schritte umfasst
(i) Vergleichen des zumindest einen Ladestromempfänger-Messwerts mit Datenbank-Einträgen einer Datenbank, in der Ladestromempfänger-Soll-Messwerte mit jeweils einem Identifikationsparameter verknüpft sind und
(ii) Identifizieren des Elektrofahrzeugs (14) mittels des Identifikationsparameters, dessen zugeordneter zumindest einer Ladestromempfänger-Soll-Messwert die kleinste Abweichung zum Ladestromempfänger-Messwert hat
